# EUROPEAN PATENT SPECIFICATION

(11) **EP 4 496 102 B1**
(45) Date of publication and mention of the grant of the patent: **05.08.2026**
(21) Application number: 24764094.9
(22) Date of filing: 31.01.2024
(51) Int. Cl.: H01M 50/457, H01M 50/451, H01M 50/411, H01M 50/431, H01M 50/42, H01M 10/052, H01M 50/403, H01M 50/449, H01M 10/0569, H01M 10/0525, H01M 50/414, H01M 50/417, H01M 50/434, H01M 50/443, H01M 50/489, H01M 50/491

(54) **ELECTROCHEMICAL DEVICE SEPARATOR, METHOD FOR MANUFACTURING SAME, AND ELECTROCHEMICAL DEVICE COMPRISING SAME**
SEPARATOR FÜR ELEKTROCHEMISCHE VORRICHTUNG, VERFAHREN ZUR HERSTELLUNG DAVON UND ELEKTROCHEMISCHE VORRICHTUNG DAMIT
SÉPARATEUR DE DISPOSITIF ÉLECTROCHIMIQUE, SON PROCÉDÉ DE FABRICATION ET DISPOSITIF ÉLECTROCHIMIQUE LE COMPRENANT

(30) Priority: 02.03.2023 KR 20230027540; 30.01.2024 KR 20240013662
(43) Date of publication of application: 22.01.2025
(73) Proprietor: LG Energy Solution, Ltd., Seoul 07335 (KR)
(72) Inventor: KIM, Ji Hyeon, Daejeon 34122 (KR); SUNG, Dong Wook, Daejeon 34122 (KR); KA, Kyung Ryun, Daejeon 34122 (KR); SUNG, In Hyouk, Daejeon 34122 (KR); KIM, Ji Yeon, Daejeon 34122 (KR)
(74) Representative: Hoffmann Eitle
(86) International application number: PCT/KR2024/001437
(87) International publication number: WO 2024/181694

(56) References cited:
- CN-A- 115 347 325
- KR-A- 20130 141 234
- KR-A- 20220 012 661
- KR-A- 20220 052 851
- KR-B1- 101 903 189
- SHI CHUAN ET AL: "A Modified Ceramic-Coating Separator with High-Temperature Stability for Lithium-Ion Battery", POLYMERS, vol. 9, no. 5, 29 April 2017 (2017-04-29), CH, pages 159, XP093263745, ISSN: 2073-4360, DOI: 10.3390/polym9050159
- JEONG YOU KYEONG ET AL: "Mussel-Inspired Coating and Adhesion for Rechargeable Batteries: A Review", vol. 10, no. 9, 22 September 2017 (2017-09-22), US, pages 7562 - 7573, XP093263760, ISSN: 1944-8244, Retrieved from the Internet <URL:https://pubs.acs.org/doi/pdf/10.1021/acsami.7b08495> DOI: 10.1021/acsami.7b08495

## Description

### Technical Field

The present application claims priority to and the benefits of Korean Patent Application No. 10-2023-0027540, filed with the Korean Intellectual Property Office on March 2, 2023.

The present disclosure relates to a separator for an electrochemical device, a method for manufacturing the same and an electrochemical device including the same.

### Background Art

Electrochemical devices convert chemical energy into electrical energy using an electrochemical reaction, and recently, lithium secondary batteries having high energy density and voltage and long cycle life, and applicable in various fields have been widely used.

A lithium secondary battery may include an electrode assembly prepared with a positive electrode, a negative electrode, and a separator disposed between the positive electrode and the negative electrode, and may be manufactured by storing the electrode assembly in a case together with an electrolyte liquid. The separator may include a porous coating layer including a polymer binder and inorganic particles on at least one surface of a porous substrate. One of the inorganic particles may be connected to another of the inorganic particles by the polymer binder to form an interstitial volume, and lithium ions may migrate through the interstitial volume. The polymer binder may provide adhesive strength to the porous coating layer in addition to fixing the inorganic particles, and the porous coating layer may adhere to each of the porous substrate and the electrode.

The porous coating layer including the polymer binder and the inorganic particles may prevent thermal shrinkage of the porous polymer substrate, and the separator including the porous coating layer shows excellent dimensional stability in a dry state with no electrolyte liquid. However, in a wet state in which the separator is impregnated with an electrolyte liquid, the polymer binder is swollen by the electrolyte liquid, or adhesive strength of the polymer binder may decrease as the separator is exposed to a temperature of about 130°C or higher with the operation of a lithium secondary battery including the separator. In such a high temperature wet state, the separator significantly shrinks as adhesive strength of the porous coating layer decreases. In particular, a cylinder-type battery, in which an electrode assembly is wound and inserted into a case while having tension applied to the electrode assembly, requires relatively small adhesive strength between an electrode and a separator compared to a pouch-type battery, thereby having a problem of further lowering dimensional stability in a wet state due to a low polymer binder content.

Accordingly, studies on a separator for securing dimensional stability under a high temperature and wet state condition while maintaining a relatively low polymer binder content in a porous coating layer have been conducted.

SHI CHUAN ET AL: "A Modified Ceramic-Coating Separator with High-Temperature Stability for Lithium-Ion battery", XP093263745, describes a lithium battery separators including a porous PE base and a coating layer of alumina inorganic particles, CMC and SBR as binder. The separator is further coated with polydopamine by immersion.

JEONG YOU KYEONG ET AL: "Mussel-Inspired Coating and Adhesion for Rechargeable Batteries: A Review",XP093263760, refers to a coating layer formed on an anode by a crosslinking reaction of polyacrylic acid and polydopamine.

### DISCLOSURE

### Technical Problem

The present disclosure is directed to providing a separator for an electrochemical device having a reduced dimensional change in a high temperature wet state, a method for manufacturing the same, and an electrochemical device including the separator for an electrochemical device.

### Technical Solution

The invention is set out in the appended set of claims.

### Advantageous Effects

A separator for an electrochemical device according to the present disclosure is capable of providing improved dimensional stability in a wet state of being impregnated with an electrolyte liquid. Specifically, the separator exhibits a thermal shrinkage rate of 5% or less in the TD direction under a high temperature condition of 130°C or higher, thereby preventing an electrode exposure caused by thermal shrinkage of the separator.

### Best Mode

Hereinafter, each constitution of the present disclosure will be described in more detail so that those skilled in the art may readily implement the present disclosure, however, this is just one example, and the scope of a right of the present disclosure is not limited by the following description.

A term "include" used in the present specification is used to list materials, compositions, devices and methods useful to the present disclosure, and is not limited to the listed examples.

Terms "about" and "substantially" used in the present specification are used to refer to, considering unique manufacturing and material tolerances, a range of the number or degree or as a meaning close thereto, and are used to prevent infringers from unfairly using the disclosure stating precise or absolute numbers provided to help understand the present disclosure.

An "electrochemical device" used in the present specification may mean a primary battery, a secondary battery, a super capacitor or the like.

A "wet state" used in the present specification may mean a state in which a separator is impregnated with at least a portion of an electrolyte liquid.

One embodiment of the present disclosure provides a separator for an electrochemical device, the separator including: a porous polymer substrate; a porous coating layer formed on at least one surface of the porous polymer substrate and including a polymer binder and inorganic particles; and a dopamine coating layer formed on the porous coating layer and including polydopamine and dextrin.

The porous polymer substrate is a porous membrane formed with a plurality of pores, and may prevent a short circuit by electrically insulating a positive electrode and a negative electrode. For example, when the electrochemical device is a lithium secondary battery, the porous polymer substrate may be an ion conductive barrier allowing lithium ions to pass through while blocking an electrical contact between a positive electrode and a negative electrode. At least some of the pores may form a three-dimensional network connecting a surface and an interior of the porous polymer substrate, and a fluid may pass through the porous polymer substrate through the pores.

As the porous polymer substrate, materials physically and chemically stable for an electrolyte liquid, an organic solvent, may be used. Examples of the porous polymer substrate may include resins such as polyolefins such as polyethylene, polypropylene and polybutylene, polyvinyl chloride, polyethylene terephthalate, polycycloolefin, polyethersulfone, polyamide, polyimide, polyimideamide, nylon, polytetrafluoroethylene, and copolymers or mixtures thereof, but are not limited thereto. Preferably, polyolefin-based resins may be used. Polyolefin-based resins may be processed to be relatively thin and may allow coating slurry to be readily coated thereon, and therefore, are suitable for manufacturing electrochemical devices having higher energy density.

The porous polymer substrate may have a single layer or multilayer structure. The porous polymer substrate may include two or more polymer resin layers with different melting points (Tm), and may provide a shutdown function during battery runaway at a high temperature. For example, the porous polymer substrate may include a polypropylene layer having a relatively high melting point and a polyethylene layer having a relatively low melting point. Preferably, the porous polymer substrate may have a three-layer structure in which polypropylene, polyethylene and polypropylene are laminated in this order. As the polyethylene layer melts as a battery temperature rises above a predetermined temperature, the pores are shut down, and thermal runaway of the battery may be prevented.

The porous polymer substrate may have a thickness of 1 µm or greater and 100 µm or less. Specifically, the porous polymer substrate may have a thickness of 10 µm or greater and 90 µm or less, 20 µm or greater and 80 µm or less, 30 µm or greater and 70 µm or less or 40 µm or greater and 60 µm or less. Preferably, the polymer substrate may have a thickness of 1 µm or greater and 30 µm or less. More preferably, the polymer substrate may have a thickness of 5 µm or greater and 15 µm or less or 8 µm or greater and 13 µm or less. By adjusting the thickness of the porous polymer substrate in the above-described range, the amounts of active materials included in an electrochemical device may increase by minimizing a volume of the electrochemical device while electrically insulating a positive electrode and a negative electrode.

The porous polymer substrate may include pores having an average diameter of 0.01 µm or greater and 1 µm or less. Specifically, the size of the pores included in the porous polymer substrate may be 0.01 µm or greater and 0.09 µm or less, 0.02 µm or greater and 0.08 µm or less, 0.03 µm or greater and 0.07 µm or less or 0.04 µm or greater and 0.06 µm or less. Preferably, the size of the pores may be 0.02 µm or greater and 0.06 µm or less. By adjusting the size of the pores of the porous polymer substrate in the above-described range, air permeability and ion conductivity of the whole manufactured separator may be controlled.

The porous polymer substrate may have air permeability of 10 s/100 cc or greater and 100 s/100 cc or less. Specifically, the porous polymer substrate may have air permeability of 10 s/100 cc or greater and 90 s/100 cc or less, 20 s/100 cc or greater and 80 s/100 cc or less, 30 s/100 cc or greater and 70 s/100 cc or less or 40 s/100 cc or greater and 60 s/100 cc or less. Preferably, the porous polymer substrate may have air permeability of 50 s/100 cc or greater and 70 s/100 cc or less. When the porous polymer substrate has air permeability in the above-described range, air permeability of the manufactured separator may be provided in a range suitable for securing output and cycle characteristics of an electrochemical device.

The air permeability (s/100 cc) means a time (second) taken for 100 cc of air to pass through a porous polymer substrate or a separator having a predetermined area under a constant pressure. The air permeability may be measured using an air permeability tester (Gurley densometer) in accordance with ASTM D 726-58, ASTM D726-94 or JIS-P8117. For example, a time taken for 100 cc of air to pass through a 1 square inch (or 6.54 cm²) sample under a pressure of 0.304 kPa of air or a pressure of 1.215 kN/m² of water may be measured using a 4110N densometer of Gurley. For example, a time taken for 100 cc of air to pass through a 1 square inch sample under a constant pressure of 4.8 inches of water at room temperature may be measured using an EG01-55-1MR tester of Asahi Seico Co., Ltd.

The porous polymer substrate may have porosity of 10 vol% or greater and 60 vol% or less. Specifically, the porous polymer substrate may have porosity of 15 vol% or greater and 55 vol% or less, 20 vol% or greater and 50 vol% or less, 25 vol% or greater and 45 vol% or less or 30 vol% or greater and 40 vol% or less. Preferably, the porous polymer substrate may have porosity of 30 vol% or greater and 50 vol% or less. When the porous polymer substrate has porosity in the above-described range, ion conductivity of the manufactured separator may be provided in a range suitable for securing output and cycle characteristics of an electrochemical device.

The porosity means a ratio of the volume of pores with respect to the total volume of the porous polymer substrate. The porosity may be measured using methods known in the art. For example, the porosity may be measured using a BET (Brunauer Emmett Teller) measurement method using adsorption of nitrogen gas, a capillary flow porometry, or a water or mercury infiltration method.

The porous coating layer is formed on at least one surface of the porous polymer substrate, and includes a polymer binder and inorganic particles. The dopamine coating layer is formed on the porous coating layer, and includes polydopamine and dextrin.

The separator may be formed by sequentially coating at least one surface of the porous polymer substrate with coating slurry including a polymer binder, inorganic particles and a dispersion medium, and a solution including dopamine and dextrin. For example, the separator may be manufactured by coating the coating slurry on at least any one surface of the porous polymer substrate and drying the result to prepare a porous coating layer-formed preliminary separator, and immersing the preliminary separator in the solution and drying the result to form a dopamine coating layer. The porous coating layer includes an interstitial volume in which the inorganic particles are connected by the polymer binder, and, while allowing lithium ions to pass through, adheres to the porous polymer substrate to prevent thermal shrinkage of the porous polymer substrate. The polydopamine included in the dopamine coating layer may be formed by polymerizing the dopamine included in the solution. The dopamine coating layer also has a porous structure formed with polydopamine and dextrin, and may allow lithium ions to pass through.

The coating slurry includes a dispersion medium, thereby dissolving or dispersing at least a portion of the polymer binder, and may disperse the inorganic particles. As the coating slurry, those having the polymer binder and the inorganic particles uniformly dispersed by controlling type and content of the dispersion medium may be used. For example, the dispersion medium may be one selected from the group consisting of water, ethanol, acetone, isopropyl alcohol (IPA), dimethylacetamide (DMAc), dimethylformamide (DMF), N-methyl-2-pyrrolidone (NMP), acetonitrile and combinations thereof. Preferably, the dispersion medium may be a mixture of water and isopropyl alcohol, or water. Using the above-described types of dispersion medium, a porous coating layer in which a polymer binder and inorganic particles are uniformly dispersed may be formed.

By further including additives such as a dispersant, a surfactant, an antifoaming agent and a flame retardant, the coating slurry is capable of improving dispersibility and flame retardancy, and improving uniformity of the formed porous coating layer. For example, the dispersant may include one or more selected from the group consisting of polyacrylic acid, oil-soluble polyamine, oil-soluble amine compounds, fatty acids, fatty alcohols, sorbitan fatty acid esters, tannic acid and pyrogallic acid. Using the above-described type of dispersant may improve stability of the coating slurry, and may secure uniformity of the porous coating layer formed with the coating slurry.

The additives may be included in an amount of 0% by weight or greater and 5% by weight or less based on the total weight of the coating slurry. Specifically, the additives may be included in an amount of 0.01% by weight or greater and 4% by weight or less, 0.1% by weight or greater and 3% by weight or less or 1% by weight or greater and 2% by weight or less. Preferably, the content of the additives may be 1% by weight or greater and 5% by weight or less. By adjusting the content of the additives in the above-described range, uniform dispersion and stability of the inorganic particles included in the coating slurry may be accomplished.

The dispersion medium included in the coating slurry may be removed by drying or heating after forming the porous coating layer. For example, the porous coating layer may include the dispersion medium in an amount of 5 ppm or less. Preferably, the porous coating layer may be formed with a polymer binder and inorganic particles. During the process of removing the dispersion medium, a plurality of pores may be formed on a surface or an inside of the porous coating layer. The pore may include an interstitial volume formed between the inorganic particles, and may have a structure that allows a fluid to pass through by forming a three-dimensional network.

The solution may be a basic buffer solution in which dopamine and dextrin are mixed. The dopamine forms polydopamine through a polymerization reaction after going through a cyclization reaction by an oxidation process without an initiator.

The solution may have a pH of 7 or greater and 12 or less. Specifically, the solution may have a pH of 7.5 or greater and 11.5 or less, 8 or greater and 11 or less, 8.5 or greater and 10.5 or less or 9 or greater and 10 or less. Preferably, the solution may have a pH of 7.5 or greater and 8.5 or less. By adjusting the pH of the solution in the above-described range, the loading amount of polydopamine and uniform distribution of polydopamine required for the dopamine coating layer may be accomplished.

The sum of the thickness of the porous coating layer and the thickness of the dopamine coating layer may be 1 µm or greater and 15 µm or less. Specifically, the sum of the thickness of the porous coating layer and the thickness of the dopamine coating layer may be 2 µm or greater and 14 µm or less, 3 µm or greater and 13 µm or less, 4 µm or greater and 12 µm or less, 5 µm or greater and 11 µm or less, 6 µm or greater and 10 µm or less or 7 µm or greater and 9 µm or less. Preferably, the sum of the thickness of the porous coating layer and the thickness of the dopamine coating layer may be 1 µm or greater and 5 µm or less. By adjusting the thicknesses of the porous coating layer and the dopamine coating layer in the above-described range, shrinkage of the porous polymer substrate is minimized, and stable adhesion to the porous polymer substrate may be obtained.

The thickness of the porous coating layer may be larger than the thickness of the dopamine coating layer. For example, the thickness of the porous coating layer may be 0.1 µm or greater and 14 µm or less. Specifically, the thickness of the porous coating layer may be 1 µm or greater and 13 µm or less, 2 µm or greater and 12 µm or less, 3 µm or greater and 11 µm or less, 4 µm or greater and 10 µm or less, 5 µm or greater and 9 µm or less or 6 µm or greater and 8 µm or less. Preferably, the thickness of the porous coating layer may be 0.1 µm or greater and 5 µm or less. The thickness of the dopamine coating layer may be 0.001 µm or greater and 5 µm or less. Specifically, the thickness of the dopamine coating layer may be 0.01 µm or greater and 4 µm or less, 0.1 µm or greater and 3 µm or less or 1 µm or greater and 2 µm or less. Preferably, the thickness of the dopamine coating layer may be 0.005 µm or greater and 1 µm or less. By adjusting the thicknesses of the porous coating layer and the dopamine coating layer in the above-described range, shrinkage of the porous polymer substrate is minimized, and stable adhesion to the porous polymer substrate may be obtained. When the thickness of the dopamine coating layer is larger than the thickness of the porous coating layer, the porous coating layer and the porous polymer substrate are delaminated.

The porous coating layer includes a polymer binder and inorganic particles. The polymer binderbinds the inorganic particles included in the porous coating layer, and may provide adhesive strength to the porous coating layer. The polymer binder may have a spherical or oval shape, but may also include other shapes except amorphous shapes.

The polymer binder is an acrylic binder. For example, the polymer binder may include one or more selected from the group consisting of polyacrylic acid, methyl acrylate, ethyl acrylate, isopropyl acrylate, n-butyl acrylate, isobutyl acrylate, ethylhexyl acrylate, methyl methacrylate, styrene-butadiene rubber, nitrile-butadiene rubber, acrylonitrile-butadiene rubber and acrylonitrile-butadiene-styrene rubber.

When the polymer binder is an acrylic binder, at least a portion of the acrylic binder may be cross-linked with polydopamine included in the dopamine coating layer. The acrylic binder may be cross-linked with polydopamine included in the dopamine coating layer through a condensation reaction. The acrylic binder may be cross-linked with polydopamine compared to a fluorine-based binder, thereby forming and maintaining binding between the porous coating layer and the dopamine coating layer, and as a result, may reduce thermal shrinkage of the separator even when the separator is in a wet state.

In the porous coating layer, the content of the polymer binder may be 5% by weight or less based on the total weight of the porous coating layer. Specifically, the content of the polymer binder may be 0.1% by weight or greater and 5% by weight or less, 0.5% by weight or greater and 4.5% by weight or less, 1% by weight or greater and 4% by weight or less, 1.5% by weight or greater and 3.5% by weight or less or 2% by weight or greater and 3% by weight or less based on the total weight of the porous coating layer. Preferably, the content of the polymer binder may be 3% by weight or greater and 5% by weight or less. By adjusting the content of the polymer binder in the above-described range, wet state thermal shrinkage of the separator may be improved through binding of the inorganic particles, stable adhesion to the porous polymer substrate, and cross-linkage with polydopamine included in the dopamine coating layer.

The polymer binder may have a weight average molecular weight (Mw) of 1,000 or greater and 10,000,000 or less. Specifically, the polymer binder may have a weight average molecular weight of 1,000 or greater and 10,000,000 or less, 10,000 or greater and 9,000,000 or less, 100,000 or greater and 8,000,000 or less, 200,000 or greater and 7,000,000 or less, 300,000 or greater and 6,000,000 or less, 500,000 or greater and 5,000,000 or less, 1,000,000 or greater and 4,000,000 or less or 2,000,000 or greater and 3,000,000 or less. By adjusting the weight average molecular weight of the polymer binder in the above-described range, mechanical properties of the porous coating layer are secured, and a separator provided with a durable porous coating layer may be manufactured.

The weight average molecular weight may be measured by gel permeation chromatography (GPC, PL GPC220, Agilent Technologies). For example, the weight average molecular weight may be measured using a PL Olexis (Polymer Laboratories) column (column temperature 160°C) and TCB (trichlorobenzene) as a solvent, and using an Agilent high temperature RI detector under a condition of a sample concentration of 1.0 mg/mL, a flow rate of 1.0 mL/min and an injection amount of 200 µl (standard: polystyrene).

The porous coating layer may include the polymer binder and the inorganic particles in a weight ratio of 5:80 to 5:95. Specifically, the polymer binder and the inorganic particles in the porous coating layer may have a weight ratio of 5:80 to 5:95 or 5:85 to 5:90. By adjusting the composition of the porous coating layer in the above-described range, formation of an interstitial volume through binding between the inorganic particles and adhesive strength of the porous coating layer for the separator may be secured simultaneously.

As the inorganic particles, those that are electrochemically stable may be used. The inorganic particles are not particularly limited as long as they do not undergo oxidation and/or reduction reactions in the operating voltage range (for example, 0 V to 5 V based on Li/Li⁺) of an electrochemical device. Particularly, using inorganic particles having a high dielectric constant as the inorganic particles contributes to an increase in the degree of dissociation of an electrolyte salt (for example, a lithium salt) in a liquid electrolyte, thereby improving ion conductivity of the electrolyte liquid. For the above-described reasons, the inorganic particles preferably include high dielectric constant inorganic particles having a dielectric constant of 5 or greater, and preferably 10 or greater. Nonlimiting examples of the inorganic particles having a dielectric constant of 5 or greater may include BaTiO₃, Pb(Zr,Ti)O₃ (PZT), Pb₁₋ₓLaₓZr_{1-y}Ti_{y}O₃ (PLZT, 0<x<1, 0<y<1), Pb (Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, Al(OH)₃, SiC, AlOOH, TiO₂, mixtures thereof, or the like.

In addition, as the inorganic particles, inorganic particles having a lithium ion transfer ability, that is, inorganic particles containing a lithium element but having a function of transporting lithium ions rather than storing lithium may be used. Nonlimiting examples of the inorganic particles having a lithium ion transfer ability may include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glass (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂ series glass (LiₓSi_{y}S_{z}, 0<x<3, 0<y<2, 0<z<4) such as Li₃PO₄-Li₂S-SiS₂, P₂S₅ series glass (LiₓP_{y}S_{z}, 0<x<3, 0<y<3, 0<z<7) such as LiI-Li₂S-P₂S₅, mixtures thereof, or the like.

In addition, as the inorganic particles, those capable of, as inorganic particles having flame retardancy, providing flame retardant characteristics to a separator or preventing a temperature inside an electrochemical device from rapidly rising may be used. Nonlimiting examples of the inorganic particles having flame retardancy may include Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂, mixture thereof, and the like.

The inorganic particles may have an average particle diameter (D50) of 50 nm or greater and 5,000 nm or less. Specifically, the inorganic particles may have an average particle diameter (D50) of 100 nm or greater and 4,500 nm or less, 200 nm or greater and 4,000 nm or less, 300 nm or greater and 3,000 nm or less, 400 nm or greater and 2,000 nm or less or 500 nm or greater and 1,000 nm or less. When the inorganic particles have an average particle diameter of less than 50 nm, a polymer binder for binding the inorganic particles is additionally required as the specific surface area increases, which is disadvantageous in terms of electrical resistance. The inorganic particles having an average particle diameter of greater than 5000 nm may reduce uniformity of the coating layer surface, and cause damages to the porous polymer substrate or electrode during lamination.

The inorganic particles may have an aspect ratio of 1 or greater and 2 or less. Specifically, the inorganic particles may have an aspect ratio of 1.1 or greater and 1.9 or less, 1.2 or greater and 1.8 or less, 1.3 or greater and 1.7 or less or 1.4 or greater and 1.6 or less. By adjusting the aspect ratio of the inorganic particles in the above-described range, the polymer binder may readily move through the pores between the inorganic particles, and through the formation of filmed area after the movement of the polymer binder, a porous coating layer in which the filmed area is uniformly distributed may be formed.

The inorganic particles may have a BET specific surface area of 5 m²/g or greater and 25 m²/g or less. Specifically, the inorganic particles may have a BET specific surface area of 6 m²/g or greater and 24 m²/g or less, 7 m²/g or greater and 23 m²/g or less, 8 m²/g or greater and 22 m²/g or less, 9 m²/g or greater and 21 m²/g or less, 10 m²/g or greater and 20 m²/g or less, 11 m²/g or greater and 19 m²/g or less, 12 m²/g or greater and 18 m²/g or less, 13 m²/g or greater and 17 m²/g or less or 14 m²/g or greater and 26 m²/g or less. By adjusting the BET specific surface area of the inorganic particles in the above-described range, the movement of the polymer binder through the pores between the inorganic particles may be controlled.

The polydopamine provides adhesive strength to the dopamine coating layer by providing inherent adhesive strength, while acting as an agent for preventing thermal shrinkage of the dopamine coating layer and the porous coating layer. At least some of the polydopamine form cross-linkage with the above-described polymer binder through an amine group to prevent detachment of the inorganic particles included in the porous coating layer, and by maintaining binding between the porous coating layer and the dopamine coating layer, thermal shrinkage of the porous polymer substrate may be reduced even in a wet state.

The polydopamine may have a decomposition temperature (T_{d}) of 280°C to 320°C. Specifically, the polydopamine may have a decomposition temperature of 290°C or higher and 310°C or lower. The decomposition temperature of the polydopamine may be analyzed through a thermogravimetric analysis (TGA) method. When the decomposition temperature of the polydopamine satisfies the above-mentioned numerical range, dimensional stability of the separator in a wet state is improved under a high temperature condition, and at the same time, detachment of the inorganic particles included in the porous coating layer is prevented, thereby preventing thermal shrinkage of the separator without interrupting lithium ion transfer.

The polydopamine may have a molecular weight of 10,000 to 1,000,000. Specifically, the polydopamine may have a molecular weight of 100,000 to 900,000, 200,000 to 800,000, 300,000 to 700,000 or 400,000 to 600,000. Preferably, the polydopamine may have a molecular weight of 20,000 to 500,000. When the molecular weight of the polydopamine satisfies the above-mentioned numerical range, a thermal shrinkage rate of the separator may be reduced in a high temperature wet state.

The polydopamine included in the dopamine coating layer may have a loading amount of 0.0001 g/m² or greater and 0.01 g/m² or less. Specifically, the polydopamine may have a loading amount of 0.0005 g/m² or greater and 0.009 g/m² or less, 0.001 g/m² or greater and 0.008 g/m² or less, 0.002 g/m² or greater and 0.007 g/m² or less, 0.003 g/m² or greater and 0.006 g/m² or less or 0.004 g/m² or greater and 0.005 g/m² or less. Preferably, the polydopamine may have a loading amount of 0.0005 g/m² or greater and 0.002 g/m² or less. By adjusting the loading amount of the polydopamine in the above-described range, a thermal shrinkage rate of the separator in a wet state may be reduced under a high temperature condition.

In the manufacturing process of the separator, polydopamine may also be included in the porous coating layer while immersing the preliminary separator in the dopamine solution. The loading amount of polydopamine included in the dopamine coating layer may be larger than the loading amount of polydopamine included in the porous coating layer. For example, the polydopamine included in the dopamine coating layer may have a loading amount of 0.0005 g/m² or greater and 0.01 g/m² or less. Specifically, the polydopamine included in the dopamine coating layer may have a loading amount of 0.001 g/m² or greater and 0.009 g/m² or less, 0.002 g/m² or greater and 0.008 g/m² or less, 0.003 g/m² or greater and 0.007 g/m² or less or 0.004 g/m² or greater and 0.006 g/m² or less. The polydopamine included in the porous coating layer may have a loading amount of 0.0001 g/m² or greater and 0.005 g/m² or less. Specifically, the polydopamine included in the porous coating layer may have a loading amount of 0.0001 g/m² or greater and 0.004 g/m² or less or 0.001 g/m² or greater and 0.003 g/m² or less. By adjusting the loading amounts of the polydopamine included in the porous coating layer and the dopamine coating layer in the above-described range, the amount of the polydopamine exposed to the outermost layer of the separator may be controlled, and as a result, a wet state thermal shrinkage rate of the separator may be reduced even under a high temperature condition.

The dextrin provides durability to the dopamine coating layer, thereby improving dimensional stability to a separator including the dopamine coating layer. The dopamine coating layer including the dextrin may maintain dimensional stability even when an external force, which is generated as an electrode adhered or adjacently disposed to the separator contracts or expands, is applied. The dextrin improves dispersibility of polydopamine to form a dopamine coating layer in which the polydopamine is uniformly dispersed. For example, even when dopamine is not yet fully dissolved in the solution including dopamine, the dextrin may allow the dopamine to remain in a uniformly dispersed state. The dextrin may be cyclodextrin, and for example, may be one or more selected from the group consisting of α-cyclodextrin, β-cyclodextrin and γ-cyclodextrin.

The separator includes the polydopamine and the dextrin in a weight ratio of 1:500 to 1:1000. Specifically, the separator may include the polydopamine and the dextrin in a weight ratio of 1:600 to 1:900 or 1:700 to 1:800. By adjusting the content of the polydopamine and the dextrin in the above-described range, the effect of reducing a wet state thermal shrinkage rate of the separator at a high temperature by the polydopamine may be achieved through uniform dispersion of the polydopamine included in the dopamine coating layer.

Specifically, it may be said that the separator of the present disclosure is in a high temperature wet state when impregnated with an electrolyte liquid at a high temperature of 135°C or higher. The thermal shrinkage rate may be evaluated to be reduced when the thermal shrinkage rate in the MD direction is less than 10% and the thermal shrinkage rate in the TD direction is less than 7% when the separator is exposed to the high temperature wet state for 30 minutes or longer. In addition, adhesive strength between the porous polymer substrate and the porous coating layer in the separator may be evaluated by peel strength when, after fixing the separator on slide glass or the like, peeling the surface at 300 mm/min in a 180° direction with respect to the direction of adhesion using a UTM. When the peel strength is 50 gf/15 mm or greater, the porous coating layer and the dopamine coating layer may be evaluated as stably adhering to the porous polymer substrate. When the polydopamine is included in a larger amount than the above-described range, the polydopamine aggregates during the dopamine coating layer forming process, and the effect of reducing a thermal shrinkage rate of the separator at a high temperature may not be secured, and stability of the separator may be reduced. When the dextrin is included in a larger amount than the above-described range, peel strength between the separator substrate and the porous coating layer may increase by the inherent adhesive strength of dextrin, however, the effect of reducing thermal shrinkage of the separator at a high temperature may not be secured. The separator for an electrochemical device may have air permeability of 20 s/100 cc or greater and 90 s/100 cc or less. Specifically, the separator may have air permeability of 25 s/100 cc or greater and 85 s/100 cc or less, 30 s/100 cc or greater and 80 s/100 cc or less, 35 s/100 cc or greater and 75 s/100 cc or less, 40 s/100 cc or greater and 70 s/100 cc or less, 45 s/100 cc or greater and 65 s/100 cc or less or 50 s/100 cc or greater and 55 s/100 cc or less. Preferably, the separator may have air permeability of 80 s/100 cc or greater and 90 s/100 cc or less. When the separator has air permeability in the above-described range, output, stability and cycle characteristics of the electrochemical device may be secured.

When manufacturing a cell using the separator for an electrochemical device, the cell may have electrical resistance of 0.5 Ohm or greater and 1.5 Ohm or less. Specifically, the cell may have electrical resistance of 0.6 Ohm or greater and 1.4 Ohm or less, 0.7 Ohm or greater and 1.3 Ohm or less, 0.8 Ohm or greater and 1.2 Ohm or less or 0.9 Ohm or greater and 1.1 Ohm or less. Preferably, the cell may have electrical resistance of 0.6 Ohm or greater and 0.8 Ohm or less.

Another embodiment of the present disclosure provides a method for manufacturing a separator for an electrochemical device, the method including: immersing a preliminary separator, which includes a porous polymer substrate, and a porous coating layer including a polymer binder and inorganic particles and formed on at least one surface of the porous polymer substrate, in a solution including dopamine and dextrin for 1 hour to 50 hours; and forming a dopamine coating layer including polydopamine and the dextrin on at least one surface of the porous coating layer by controlling an amount of dissolved oxygen of the solution. Contents overlapping with the contents described in the separator for an electrochemical device are replaced with the description of the embodiment provided above.

The immersing of the preliminary separator in the solution may further include preparing a preliminary separator by coating at least one surface of the porous polymer substrate with coating slurry including a polymer binder and inorganic particles. The preliminary separator has a porous coating layer including a polymer binder and inorganic particles formed on at least one surface of a porous polymer substrate. For example, the coating may be formed using methods such as a bar coater, a wire bar coater, a roll coater, a spray coater, a spin coater, an inkjet coater, a screen coater, a reverse coater, a gravure coater, a knife coater, a slot die coater, a hot melt coater, a comma coater and a direct metering coater, however, the method is not limited thereto. Preferably, the forming of the porous coating layer may be simultaneously coating the coating slurry on both surfaces of the porous polymer substrate using a bar coater or a slot die coater.

The preparing of the preliminary separator may further include corona discharging at least one surface of the porous polymer substrate. After the corona discharging, the coating slurry may be coated on the porous polymer substrate. The corona discharging of at least one surface of the porous polymer substrate prevents a decrease in the binging strength between the surface of the porous polymer substrate and the surface of the porous coating layer at a high temperature, and may prevent the binding strength between the surface of the polymer substrate and the surface of the porous coating layer from decreasing caused by an electrolyte.

The corona discharge treatment may be treating at least one surface of the porous polymer substrate with a voltage of 0.1 kV or greater and 10 kV or less in air. Specifically, the corona discharge treatment may be treating with a voltage of 0.2 kV or greater and 9 kV or less, 0.3 kV or greater and 8 kV or less, 0.4 kV or greater and 7 kV or less, 0.5 kV or greater and 6 kV or less, 0.6 kV or greater and 5 kV or less, 0.7 kV or greater and 4 kV or less, 0.8 kV or greater and 3 kV or less, 0.9 kV or greater and 2 kV or less or 1.0 kV or greater and 2 kV or less in air. Preferably, the corona discharge treatment may be treating with a voltage of 1.8 kV in air. By adjusting the applied voltage of the corona discharge treatment in the above-described range, an appropriate number of functional groups are formed on the surface of the polymer substrate, and damages to the surface of the polymer substrate may be prevented.

The preparing of the preliminary separator may further include removing a dispersion medium included in the coating slurry. Specifically, the removing of the dispersion medium is evaporating a dispersion medium included in the coating layer by drying or heating the porous polymer substrate coated with the coating slurry.

The immersing of the preliminary separator is immersing the preliminary separator in a solution including dopamine and dextrin for 1 hour to 50 hours to coat a dopamine coating layer including polydopamine and dextrin. Specifically, the preliminary separator may be immersed for 4 hours to 48 hours, 8 hours to 44 hours or 12 hours to 40 hours. Preferably, the immersing time may be from 40 hours to 48 hours. In the above-described time range, the loading amount of polydopamine included in the dopamine coating layer may be adjusted in the above-described range.

The forming of the dopamine coating layer may be controlling the amount of dissolved oxygen in the solution while the preliminary separator is immersed in the solution. To form the dopamine coating layer including polydopamine from the solution including dopamine, oxidizing the dopamine to form cyclic dopamine, and then polymerizing the cyclic dopamine may be accompanied. The degree of dopamine oxidation may be controlled by exposing the solution to oxygen, and for example, the amount of dissolved oxygen of the solution may be adjusted by controlling the degree of opening and closing of the reaction vessel containing the solution.

Specifically, the amount of dissolved oxygen included in the preliminary separator-immersed solution may be from 8.0 ppm to 12.0 ppm. Specifically, the amount of dissolved oxygen of the solution may be 8.5 ppm or greater and 11.5 ppm or less, 9.0 ppm or greater and 11.0 ppm or less or 9.5 ppm or greater and 10.5 ppm or less. When adjusting the amount of dissolved oxygen of the solution in the above-described range, polymerization and loading in the above-described range of polydopamine may be achieved. As a method of analysis for measuring the amount of dissolved oxygen, Winkler-Azide modification using manganese sulfate and an alkaline potassium iodide sodium azide solution may be used as an example.

The method for manufacturing a separator according to the embodiment may further include, after the forming of the dopamine coating layer, thermally cross-linking the polymer binder and the polydopamine by exposing the separator to 60°C to 90°C. For example, the dopamine coating layer-formed separator may be dried or heated at 60°C to 90°C for 1 hour to 12 hours. Preferably, the separator may be dried or heated at 70°C to 80°C for 6 hours to 12 hours. The polymer binder may be an acrylic binder, and high temperature wet state dimensional stability of the separator may be improved by thermally cross-linking the acrylic binder and the polydopamine included in any one or more of the porous coating layer and the dopamine coating layer.

Still another embodiment of the present disclosure provides an electrochemical device including: a positive electrode; a negative electrode; and a separator provided between the positive electrode and the negative electrode, wherein the separator is the separator for an electrochemical device of the above-described embodiment. The electrochemical device may be manufactured by inserting an electrode assembly including a positive electrode, a negative electrode and a separator provided between the positive electrode and the negative electrode into a case or pouch and sealing the case or pouch. Before sealing the case or pouch, an electrolyte liquid may be injected to impregnate the electrode assembly with the electrolyte liquid. The shape of the case or pouch is not limited. For example, the electrochemical device may be a cylindrical, prismatic, coin-type or pouch-type lithium secondary battery.

The positive electrode and the negative electrode may be formed by coating an electrode active material on at least one surface of each current collector through coating and drying. As the current collector, materials having conductivity without causing chemical changes to the electrochemical device may be used. For example, the current collector for a positive electrode may include aluminum, nickel, titanium, baked carbon, stainless steel; aluminum or stainless steel of which surface is treated with carbon, nickel, titanium, silver or the like, and the like, but is not limited thereto. For example, the current collector for a negative electrode may include copper, nickel, titanium, baked carbon, stainless steel; copper or stainless steel of which surface is treated with carbon, nickel, titanium, silver or the like, and the like, but is not limited thereto. The current collector may have various forms such as thin metal plate, film, foil, net, porous body and foam.

The positive electrode is provided with a positive electrode current collector, and a positive electrode active material layer including a positive electrode active material, a conductor and a binder resin on at least one surface of the current collector. The positive electrode active material may include one of a layered compound or a compound substituted with one or more transition metals such as lithium manganese composite oxide (LiMn₂O₄, LiMnO₂ and the like), lithium cobalt oxide (LiCoO₂) or lithium nickel oxide (LiNiO₂); lithium manganese oxide such as chemical formula Li₁₊ₓMn₂₋ₓO₄ (herein, x is from 0 to 0.33), LiMnO₃, LiMn₂O₃ or LiMnO₂; lithium copper oxide (Li₂CuO₂); vanadium oxide such as LiV₃O₃, LiV₃O₄, V₂O₅ or Cu₂V₂O₇; Ni-site-type lithium nickel oxide represented by chemical formula LiNi₁₋ₓMₓO₂ (herein, M=Co, Mn, Al, Cu, Fe, Mg, B or Ga, and x=0.01 to 0.3); lithium manganese composite oxide represented by chemical formula LiMn₁₋ₓMₓO₂ (herein, M=Co, Ni, Fe, Cr, Zn or Ta, and x=0.01 to 0.1) or Li₂Mn₃MO₈ (herein, M=Fe, Co, Ni, Cu or Zn); LiMn₂O₄ in which some of Li in the chemical formula are substituted with alkaline earth metal ions; a disulfide compound; and Fe₂(MoO₄)₃, or a mixture of two or more types thereof.

The negative electrode is provided with a negative electrode current collector, and a negative electrode active material layer including a negative electrode active material, a conductor and a binder resin on at least one surface of the current collector. The negative electrode may include, as the a negative electrode active material, one type selected from among lithium metal oxide; carbon such as non-graphitizable carbon or graphite-based carbon; LiₓFe₂O₃ (0≤x≤1), LiₓWO₂ (0≤x≤1), silicon-based materials such as Si, SiOₓ (0<x<2), SiC and Si alloy; metal composite oxide such as SnₓMe₁₋ₓMe'_{y}O_{z} (Me: Mn, Fe, Pb, Ge; Me': Al, B, P, Si, elements of groups 1, 2 and 3 of the periodic table, halogen; 0<x≤1; 1≤y≤3; 1≤z≤8); lithium metal; lithium alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni-based material; and titanium oxide, or a mixture of two or more types thereof.

The conductor may be any one selected from the group consisting of graphite, carbon black, carbon fiber or metal fiber, metal powder, conductive whisker, conductive metal oxide, carbon nanotube, activated carbon and polyphenylene derivative, or a mixture of two or more types of conductive materials among these. The carbon nanotube has a graphite sheet in a cylinder shape with a nano-sized diameter and has a sp² bond structure, and exhibits characteristics of conductor or semiconductor depending on the angle and the structure in which the graphite sheet is rolled. The carbon nanotube may be divided into single-walled carbon nanotube (SWCNT), double-walled carbon nanotube (DWCNT) and multi-walled carbon nanotube (MWCNT) depending on the number of bonds forming the wall, and these carbon nanotubes may be properly selected depending on the application of the dispersion. More specifically, the conductor may be one selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide, or a mixture of two or more types of conductive materials among these.

As the binder resin, binder resins commonly used in an electrode of an electrochemical device may be used. Nonlimiting examples of such a binder resin may include polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose and the like, but are not limited thereto.

The electrolyte liquid is obtained by dissolving or dissociating a salt, which has a structure such as A⁺B⁻ in which A⁺ includes an ion consisting of an alkali metal cation such as Li⁺, Na⁺ or K⁺ or a combination thereof and B⁻ includes an ion consisting of an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻ or C(CF₂SO₂)₃⁻ or a combination thereof, in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (γ-butyrolactone) or a mixture thereof. Preferably, as the electrolyte liquid, EC/EMC having a weight ratio of 3/7 may be used as a solvent, and dimensional stability of the separator according to the embodiment may be maximized.

The electrochemical device including the electrode assembly may be a lithium secondary battery. The battery may be used as a unit cell, and may be used as a battery module including the unit cell, a battery pack including the battery module, and a device including the battery pack as a power source. The device may include small devices such as computers, mobile phones and power tools, and medium-to-large devices such as electric motor vehicles including electric vehicles (EV), hybrid electric vehicles (HEV), plug-in hybrid electric vehicles (PHEV) and the like powered by an electric motor; electric two-wheeled bicycles including electric bicycles (E-bike) and electric scooters (E-scooter); electric golf carts; and systems for power storage, but is not limited thereto.

Hereinafter, the present disclosure will be described in more detail through specific examples and experimental examples. The following examples and experimental examples are for illustrative purposes only, and the present disclosure is not limited by the following examples and experimental examples.

### Example 1

### Preparation of Coating Slurry

100 mL of an aqueous dispersion medium was prepared by mixing water and isopropyl alcohol in a weight ratio of 95:5 at room temperature (25°C). To the aqueous dispersion medium, 2 g of an acrylic polymer binder (styrene-acryl, particle diameter: 350 nm to 400 nm, T_{g}: 40°C) and 30 g of inorganic particles (Al₂O₃, particle diameter: 400 nm) were introduced, and the mixture was stirred for 60 minutes using a shaker to prepare coating slurry in which the polymer binder and the inorganic particles are dispersed.

### Preparation of Porous Substrate

As a porous substrate, a polyethylene film (MI: 0.2 g/10 min, Tₘ: 135°C, porosity: 45%, average pore size: 45 nm) having a size of 20 cm×30 cm and a thickness of 9 µm was used.

### Preparation of Preliminary Separator

The coating slurry was coated on both surfaces of the polyethylene film using a bar coater to form a porous coating layer having each coating thickness of 2 µm.

A process of removing the dispersion medium was repeated 5 times by applying a low temperature air flow to the coating layer-formed polyethylene film, and as a result, a preliminary separator having a total thickness of 13 µm was prepared.

### Preparation of Solution Including Dopamine and Dextrin

Dopamine and dextrin were added to a basic buffer solution (20 mM tris-HCl buffer) at concentrations of 2 mg/mL and 50 mg/mL, respectively, using a petri dish at room temperature (25°C), and the added amounts were adjusted so that dopamine and dextrin have a final content ratio of 1:1000. After the preparation, the lid of the petri dish was partially opened to prepare a dopamine and dextrin solution having an amount of dissolved oxygen of 9 ppm and a pH of 8. The preliminary separator was immersed in the solution for 48 hours, and then dried for 12 hours at 60°C to manufacture a separator having a total thickness of 14 µm (porous coating layer thickness 2.0 µm, dopamine coating layer thickness 0.5 µm), and including polydopamine and dextrin in a weight ratio of 1:1000.

### Example 2

A separator was manufactured in the same manner as in Example 1, except that, when manufacturing the separator, the preliminary separator was immersed and then dried for 12 hours at 90°C to manufacture a separator having a total thickness of 14 µm (porous coating layer thickness 2.3 µm, dopamine coating layer thickness 0.2 µm).

### Example 3

A separator including polydopamine and dextrin in a weight ratio of 1:500 was manufactured in the same manner as in Example 1, except that dopamine was added at a concentration of 10 mg/mL, and the added amount was adjusted so that dopamine and dextrin have a final content ratio of 1:500.

### Comparative Example 1

A separator was manufactured in the same manner as in Example 1, except that, when manufacturing the separator, the preliminary separator was immersed in a solution including dopamine but not dextrin.

### Comparative Example 2

A separator was manufactured in the same manner as in Example 1, except that, when manufacturing the separator, the preliminary separator was immersed in a solution including dextrin but not dopamine.

### Comparative Example 3

A separator including polydopamine and dextrin in a weight ratio of 1:400 was manufactured in the same manner as in Example 1, except that dopamine and dextrin were added to the solution at concentrations of 20 mg/mL and 20 mg/mL, respectively, and the added amounts were adjusted so that dopamine and dextrin have a final content ratio of 1:400.

### Experimental Example. Identification of Separator Properties

### Measurement of Air Permeability

As air permeability, time taken for 100 cc of air to penetrate the separator having a diameter of 28.6 mm and an area of 645 mm² was measured using a Gurley densometer (Gurley, 4110N).

### Identification of Dimensional Stability

Each of the separators of Examples and Comparative Examples was prepared to a size of 5 cm×5 cm, and inserted into an aluminum pouch having a size of 7 cm×10 cm. To the pouch, 1 g of an electrolyte liquid was injected, and the pouch was sealed. As the electrolyte liquid, a solution including, as additives, 3 mol of vinylene carbonate (VC), 1.5 mol of propane sultone (PS), 1 mol of ethylene sulfate (ESa) and 1 mol of lithium salt LiPF₆ in a solvent in which ethylene carbonate (EC)/ethylmethyl carbonate (EMC) are mixed in a weight ratio of 3/7 was used.

The sealed pouch was exposed in an oven for 30 minutes at 135°C, then the pouch was disassembled, and the shrinkage rate in the TD direction was measured. The results are shown in the following Table 1.

### Measurement of Peel Strength of Separator

Each of the separators of Examples and Comparative Examples was sampled to have a width of 20 mm, and attached to slide glass using a double-sided tape (3M) having a width of 18 mm to prepare a sample for testing.

While peeling off the slide glass from the separator using a UTM at a speed of 300 mm/min in a 180° direction with respect to the attached direction, the strength of the porous coating layer being peeled off was measured, and the results are shown in the following Table 1.

**[Table 1]**

| | Example 1 | Example 2 | Example 3 | Comparative Example 1 | Comparative Example 2 | Comparative Example 3 |
|---|---|---|---|---|---|---|
| Thickness ratio between porous coating layer and dopamine coating layer | 4:1 | 11.5 : 1 | 11.5 :1 | 11.5:1 | 11.5:1 | 11.5:1 |
| Weight ratio between polydopamine and dextrin | 1:10 00 | 1:10 00 | 1:50 0 | Not include dextrin | Not include polydopamine | 1:400 |
| Air permeability (s/100 cc) | 128 | 125 | 119 | 108 | 122 | 114 |
| Wet state thermal shrinkage rate (MD (%)/TD (%)) at 135°C | 5/2 | 7/4 | 4/2 | 14/12 | 12/11 | 10/7 |
| 180° peel strength (gf/15 mm) | 66 | 65 | 52 | 38 | 66 | 47 |

## Claims

1. A separator for an electrochemical device, the separator comprising:
a porous polymer substrate;
a porous coating layer formed on at least one surface of the porous polymer substrate and including a polymer binder and inorganic particles;
a dopamine coating layer formed on the porous coating layer and including polydopamine and dextrin, comprising the polydopamine and the dextrin in a weight ratio of 1:500 to 1:1000, and
wherein the polymer binder includes an acrylic binder, and at least a portion of the acrylic binder is cross-linked with the polydopamine.

2. The separator for an electrochemical device of claim 1, wherein, in the porous coating layer, a content of the polymer binder is 5% by weight or less based on a total weight of the porous coating layer.

3. The separator for an electrochemical device of claim 1, wherein the polymer binder includes one or more selected from the group consisting of polyacrylic acid, methyl acrylate, ethyl acrylate, isopropyl acrylate, n-butyl acrylate, isobutyl acrylate, ethylhexyl acrylate, methyl methacrylate, styrene-butadiene rubber, nitrile-butadiene rubber, acrylonitrile-butadiene rubber and acrylonitrile-butadiene-styrene rubber.

4. The separator for an electrochemical device of claim 1, wherein a thickness of the porous coating layer is larger than a thickness of the dopamine coating layer.

5. An electrochemical device comprising:
a positive electrode;
a negative electrode; and
a separator disposed between the positive electrode and the negative electrode,
wherein the separator is the separator for an electrochemical device of any one of claims 1 to 4.

6. The electrochemical device of claim 5, further comprising an electrolyte liquid including EC/EMC in a weight ratio of 3/7.

7. A method for manufacturing a separator for an electrochemical device, the method comprising:
immersing a preliminary separator, which includes a porous polymer substrate, and a porous coating layer including a polymer binder and inorganic particles and formed on at least one surface of the porous polymer substrate, in a solution including dopamine and dextrin for 1 hour to 50 hours; and
forming a dopamine coating layer including polydopamine and the dextrin on at least one surface of the porous coating layer by controlling an amount of dissolved oxygen of the solution,
wherein the polydopamine and the dextrin are present in a weight ratio of 1:500 to 1:1000, and
wherein the polymer binder includes an acrylic binder, and at least a portion of the acrylic binder is cross-linked with the polydopamine.

8. The method of claim 7, further comprising thermally cross-linking the polymer binder and the polydopamine by exposing the separator to 60°C to 90°C.

## Patentansprüche

1. Separator für eine elektrochemische Vorrichtung, wobei der Separator umfasst:
ein poröses Polymersubstrat,
eine poröse Beschichtungsschicht, die auf mindestens einer Oberfläche des porösen Polymersubstrats gebildet ist und ein Polymerbindemittel und anorganische Partikel enthält,
eine Dopaminbeschichtungsschicht, die auf der porösen Beschichtungsschicht gebildet ist und Polydopamin und Dextrin enthält, umfassend das Polydopamin und das Dextrin in einem Gewichtsverhältnis von 1:500 bis 1:1.000, und
wobei das Polymerbindemittel ein Acrylbindemittel enthält und mindestens ein Teil des Acrylbindemittels mit dem Polydopamin vernetzt ist.

2. Separator für eine elektrochemische Vorrichtung nach Anspruch 1, wobei in der porösen Beschichtungsschicht ein Gehalt des Polymerbindemittels 5 Gew.-% oder weniger, bezogen auf ein Gesamtgewicht der porösen Beschichtungsschicht, beträgt.

3. Separator für eine elektrochemische Vorrichtung nach Anspruch 1, wobei das Polymerbindemittel eines oder mehrere, ausgewählt aus der Gruppe, bestehend aus Polyacrylsäure, Methylacrylat, Ethylacrylat, Isopropylacrylat, n-Butylacrylat, Isobutylacrylat, Ethylhexylacrylat, Methylmethacrylat, Styrol-Butadien-Kautschuk, Nitril-Butadien-Kautschuk, AcrylnitrilButadien-Kautschuk und Acrylnitril-Butadien-Styrol-Kautschuk, enthält.

4. Separator für eine elektrochemische Vorrichtung gemäß Anspruch 1, wobei eine Dicke der porösen Beschichtungsschicht größer als eine Dicke der Dopaminbeschichtungsschicht ist.

5. Elektrochemische Vorrichtung, umfassend:
eine positive Elektrode,
eine negative Elektrode und
einen Separator, der zwischen der positiven Elektrode und der negativen Elektrode angeordnet ist,
wobei der Separator der Separator für eine elektrochemische Vorrichtung gemäß einem der Ansprüche 1 bis 4 ist.

6. Elektrochemische Vorrichtung nach Anspruch 5, ferner umfassend eine Elektrolytflüssigkeit, die EC/EMC in einem Gewichtsverhältnis von 3/7 enthält.

7. Verfahren zur Herstellung eines Separators für eine elektrochemische Vorrichtung, wobei das Verfahren umfasst:
Eintauchen eines Vorseparators, der ein poröses Polymersubstrat und eine poröse Beschichtungsschicht enthält, die ein Polymerbindemittel und anorganische Partikel enthält und auf mindestens einer Oberfläche des porösen Polymersubstrats gebildet ist, in eine Lösung, die Dopamin und Dextrin enthält, für 1 Stunde bis 50 Stunden und
Bilden einer Dopaminbeschichtungsschicht, die Polydopamin und das Dextrin enthält, auf mindestens einer Oberfläche der porösen Beschichtungsschicht durch Kontrollieren einer Menge an gelöstem Sauerstoff der Lösung,
wobei das Polydopamin und das Dextrin in einem Gewichtsverhältnis von 1:500 bis 1:1.000 vorhanden sind und
wobei das Polymerbindemittel ein Acrylbindemittel enthält und mindestens ein Teil des Acrylbindemittels mit dem Polydopamin vernetzt ist.

8. Verfahren gemäß Anspruch 7, ferner umfassend ein thermisches Vernetzen des Polymerbindemittels und des Polydopamins, indem der Separator einer Temperatur von 60°C bis 90°C ausgesetzt wird.

## Revendications

1. Séparateur pour un dispositif électrochimique, le séparateur comprenant :
un substrat polymère poreux ;
une couche de revêtement poreuse formée sur au moins une surface du substrat polymère poreux et incluant un liant polymère et des particules inorganiques ;
une couche de revêtement de dopamine formée sur la couche de revêtement poreuse et incluant de la polydopamine et de la dextrine, comprenant la polydopamine et la dextrine dans un rapport pondéral de 1:500 à 1:1000, et
dans lequel le liant polymère inclut un liant acrylique, et au moins une partie du liant acrylique est réticulée avec la polydopamine.

2. Séparateur pour un dispositif électrochimique selon la revendication 1, dans lequel, dans la couche de revêtement poreuse, une teneur du liant polymère est de 5 % en poids ou moins sur la base du poids total de la couche de revêtement poreuse.

3. Séparateur pour un dispositif électrochimique selon la revendication 1, dans lequel le liant polymère inclut un ou plusieurs éléments sélectionnés dans le groupe consistant en l'acide polyacrylique, l'acrylate de méthyle, l'acrylate d'éthyle, l'acrylate d'isopropyle, l'acrylate de n-butyle, l'acrylate d'isobutyle, l'acrylate d'éthylhexyle, le méthacrylate de méthyle, le caoutchouc styrène-butadiène, le caoutchouc nitrile-butadiène, le caoutchouc acrylonitrile-butadiène et le caoutchouc acrylonitrile-butadiène-styrène.

4. Séparateur pour un dispositif électrochimique selon la revendication 1, dans lequel une épaisseur de la couche de revêtement poreuse est supérieure à une épaisseur de la couche de revêtement de dopamine.

5. Dispositif électrochimique comprenant :
une électrode positive ;
une électrode négative ; et
un séparateur disposé entre l'électrode positive et l'électrode négative,
dans lequel le séparateur est le séparateur pour un dispositif électrochimique selon l'une quelconque des revendications 1 à 4.

6. Dispositif électrochimique selon la revendication 5, comprenant en outre un liquide électrolytique incluant de l'EC/de l'EMC dans un rapport pondéral de 3/7.

7. Procédé de fabrication d'un séparateur pour un dispositif électrochimique, le procédé comprenant :
l'immersion d'un séparateur préliminaire, qui inclut un substrat polymère poreux, et une couche de revêtement poreuse incluant un liant polymère et des particules inorganiques et formée sur au moins une surface du substrat polymère poreux, dans une solution incluant de la dopamine et de la dextrine pendant 1 heure à 50 heures ; et
la formation d'une couche de revêtement de dopamine incluant de la polydopamine et de la dextrine sur au moins une surface de la couche de revêtement poreuse par régulation d'une quantité d'oxygène dissous de la solution,
dans lequel la polydopamine et la dextrine sont présentes dans un rapport pondéral de 1:500 à 1:1000, et
dans lequel le liant polymère inclut un liant acrylique, et au moins une partie du liant acrylique est réticulée avec la polydopamine.

8. Procédé selon la revendication 7, comprenant en outre la réticulation thermique du liant polymère et de la polydopamine par exposition du séparateur à une température de 60 °C à 90 °C.
